# EUROPEAN PATENT APPLICATION

(11) **EP 1 321 930 A1**
(43) Date of publication of application: **25.06.2003**
(21) Application number: 01965693.3
(22) Date of filing: 18.09.2001
(51) Int. Cl.: G11B 7/004, G11B 7/24, C08F 22/40, C08F 220/10, C08F 299/02

(54) **METHOD OF RECORDING/REPRODUCING WITH BLUE-PURPLE LASER LIGHT AND INFORMATION RECORDING MEDIUM SUITABLE FOR THE SAME**

(30) Priority: 19.09.2000 JP 2000283426
(71) Applicant: DAINIPPON INK AND CHEMICALS, INC., Itabashi-ku, Tokyo 174-8520 (JP)
(72) Inventor: FUJII, Koichi, Asaka-shi, Saitama 351-0021 (JP); MURAKAMI, Kazuo, Saitama 350-1108 (JP)
(74) Representative: Albrecht, Thomas, Dr.
(86) International application number: JP0108095
(87) International publication number: WO02025644

(57) **Abstract**

An ultraviolet curable composition is prepared by using a maleimide compound itself having a photopolymerization initiating function, as a main component, in combination with various acrylate compounds as a subsidiary component, and a light transmitting layer is formed from the ultraviolet curable composition. In an information storage medium comprising at least a reflection film, an information storage layer and a light transmitting layer made of the ultraviolet curable composition formed on a substrate, when using laser light having an emission wavelength of 370 to 430 nm as an irradiation light source, recording or playback of information is conducted at high storage density.

## Description

### TECHNICAL FIELD

The present invention relates to a method of recording and playing back information on an information storage medium or optical disc comprising at least a reflection film, a light transmitting layer made of a cured film of an ultraviolet curable composition (hereinafter "light transmitting layer made of a cured film" is abbreviated to "light transmitting layer" and is used in combination) and an information storage layer formed on a substrate. Particularly, the present invention relates to a method of recording and playing back information by irradiating the disc with a laser light through the light transmitting layer, capable of recording and playing back information on the information storage medium using a blue-violet semiconductor laser as a light source.

Furthermore, the present invention relates to an information storage medium comprising a light transmitting layer which is highly transmissive to laser light in a blue-violet wavelength region.

### BACKGROUND ART

Progress in information technologies in recent years enabled the transmission of large quantities' of information. Accordingly, there is a demand for an information storage medium such as an optical disc having a high storage density so as to record and play back a large quantity of information such as images, music, or computer data.

As an information storage medium having a high storage density, the digital versatile disc (DVD) is becoming increasingly popular at present. The DVD consists of two substrates, each 0.6 mm thick, bonded together with an adhesive. In the DVD technology, a high storage density is achieved by employing a semiconductor laser that emits light of wavelength λ = 650 nm, shorter than that of the compact disc (CD), for the light source for recording and playback and an optical system having a higher numerical aperture.

In order to record and play back video data for HDTV (High Definition Television) which requires larger storage capacity, however, further increase in the storage density is required. For this reason, research has been in progress on methods and information storage media (optical discs) for storing information with further higher density that would become the post-DVD next-generation storage technology.

Japanese Unexamined Patent Application, First Publication No. Hei 11-191240, for example, proposes to achieve an increase in the storage capacity by forming a light transmitting layer from a cured film of a specific acrylate composition that undergoes cationic photopolymerization reaction, with the light transmitting layer being made in a thin film so as to allow higher numerical aperture, so that a laser that emits light having a wavelength λ of approximately 400 nm, which is shorter than a wavelength λ of 650 nm of the laser used for the DVD, for example, a blue-violet semiconductor laser having an emission wavelength in a range from 370 to 430 nm, can be used as the light source for recording and playback of information.

The aforementioned publication also proposes a disc structure and a method of recording and playing back information to achieve the higher storage density. The disc structure is such that a reflection film and an information storage layer (and a reflection film provided over pits, in the case in which the information storage section comprises read-only information pits) are formed on a disc substrate, and a light transmitting layer made of a cured film of an ultraviolet curable composition having a thickness of about 0.1 mm is formed thereon depending on the application. Recording and playing back operations are carried out by irradiating the disc with recording or playback laser light through the light transmitting layer, not on the substrate side of the disc, thereby allowing for the higher numerical aperture of the optical system and increase of the storage density. The light transmitting layer is formed by coating the substrate with an ultraviolet curable composition using a spin coater or the like and irradiating it with ultraviolet light to thereby cure the ultraviolet curable composition. There was a report (ISOM/ODS '99) that an optical disc having the structure described above was manufactured whereon recording and playing back laser light were applied on the light transmitting layer side, not on the substrate side, thereby recording and playing back information, and a high storage density was achieved resulting in 25G bytes of storage capacity on a single side, that is about 2.5 times the storage capacity of the current DVD. This new storage medium is referred to as a "next-generation DVD".

As the material used to form the light transmitting layer, it is generally conceived to use an acrylate-type ultraviolet curable composition containing a photopolymerization initiator as an essential component, namely an acrylate-type ultraviolet curable composition which has been used as the protective coating material for the CD. However, the use of the conventional acrylate-type ultraviolet curable composition involves various problems. Most notably, this composition has a low viscosity that makes it difficult to form a thick film of a uniform thickness of about 0.1 mm that is required. Even when a thick film of about 0.1 mm can be formed, the acrylate-type ultraviolet curable composition requires it to increase the dose of ultraviolet light and/or increase the amount of the photopolymerization initiator to be added, in order to ensure satisfactory curing performance. These requirements lead to lower productivity and deterioration of the information storage medium substrate, thus causing problems in the manufacturing process.

Among the problems, the necessity to increase the amount of the photopolymerization initiator to be added results in problems such as the following. That is, the amount of the unreacted product or the residual amount of by-products of the photopolymerization initiator increases in the light transmitting layer after curing. Also the photopolymerization initiator often has an aromatic ring as a molecular structure. As a result, absorptivity increases for light of a wavelength λ of approximately 400 nm due to the aromatic ring included in the light transmitting layer. This leads to lower light transmittance at a wavelength λ of approximately 400 nm, that makes the recording and playback of the information on the medium unstable or, in the worst case, impossible. This problem affects the essential function of the information storage medium, and therefore requires major efforts to overcome.

### DISCLOSURE OF THE INVENTION

Under these circumstances, the present invention has been made, and an object of the present invention is to provide a method capable of recording or playing back information on an information storage medium when using, as an irradiation light source, light having a wavelength λ of approximately 400 nm, especially blue-violet semiconductor laser light. Therefore, a light transmitting layer having high light transmittance (85% or higher) to laser light is formed and a composition containing a compound other than an acrylate-type compound as a main component is used, as an ultraviolet curable composition constituting the light transmitting layer, in place of a composition containing an acrylate-type compound as a main component using commonly a conventional photopolymerization initiator and, furthermore, an information storage medium comprising the light transmitting layer is provided.

To solve the problems described above, the present inventors have intensively researched and have found that, when a composition is prepared by mixing an ultraviolet curable composition with a maleimide compound as a photopolymerizable compound, which does not require the use of a photopolymerization initiator because the compound itself has a photopolymerization initiating function, and then a light transmitting layer is formed by using a cured film thereof, it is made possible to obtain a light transmitting layer which is highly transmissive to blue-violet laser light having an emission wavelength of 370 to 430 nm and therefore capable of recording or playing back information, and to obtain an information storage medium comprising the light transmitting layer while solving the drawbacks of manufacturing technology. Thus, the present invention has been completed.

A first aspect of the present invention is directed to a method of recording or playing back information on an information storage medium, which comprises irradiating an information storage medium comprising at least a reflection film, an information storage layer and a light transmitting layer made of a cured film of an ultraviolet curable composition formed on a substrate with laser light having an emission wavelength of 370 to 430 nm, wherein the ultraviolet curable composition is an ultraviolet curable composition containing a compound having two or more maleimide groups in the molecule.

The maleimide compound used in the present invention does not require the addition of a conventional photopolymerization initiator because the compound itself has a photopolymerization initiating function capable of forming a cured film, thereby making it possible to reduce absorption of light having a wavelength in a range from 370 to 430 nm owing to the photopolymerization initiator.

The ultraviolet curable composition may contain a compound having an acrylate group.

The use of various acrylate compounds in combination is very effective to impart various characteristics to a cured film and to improve the functionality. Also the use thereof in combination increases the degree of freedom in selection and decisions of raw materials for satisfying required performances.

Because of the necessity of kinds and properties of the acrylate compounds to be used in combination as well as manufacturing conditions thereof, the acrylates compounds can be used in combination as long as they satisfy characteristics of the light transmitting layer.

In a first aspect, the compound having two or more maleimide groups in the molecule may be a compound represented by the following general formula (1): 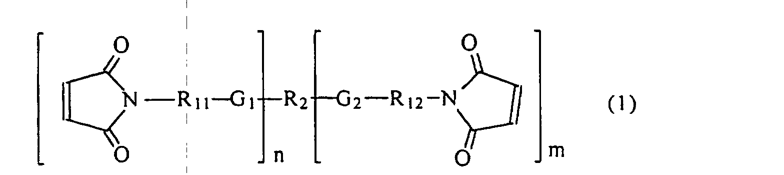 wherein m and n each independently represents an integer of 1 to 5 and m + n represent an integer of 6 or less, R₁₁ and R₁₂ each independently represents a hydrocarbon bond composed of an aliphatic group or an aromatic group, G₁ and G₂ each independently represents any of an ether bond, an ester bond, a urethane bond and a carbonate bond, and R₂ represents (A) a (poly)ether bonded chain or a (poly)ether residue, (B) a (poly)ester bonded chain or a (poly)ester residue, (C) a (poly)urethane bonded chain or a (poly)urethane residue, or (D) a (poly)carbonate bonded chain or a (poly)carbonate residue, each having an average molecular weight of 40 to 100,000 in which an aliphatic group or an aromatic group is bonded through at least one bond selected from the group consisting of (a) an ether bond, (b) an ester bond, (c) a urethane bond, and (d) a carbonate bond.

In the first aspect, the compound having two or more maleimide groups in the molecule may be a compound of the general formula (1) in which R₁₁ and R₁₂ each independently represents a hydrocarbon bond selected from the group consisting of (1-A1) an alkylene group, (1-A2) a cycloalkylene group, (1-A3) an aryl alkylene group, and (1-A4) a cycloalkyl alkylene group, G₁ and G₂ each independently represents an ester bond represented by -COO- or -OCO-, and R₂ represents (A) a (poly)ether bonded chain or a (poly)ether residue or (B) a (poly)ester bonded chain or a (poly)ester residue, each having an average molecular weight of 100 to 100,000 in which at least one organic group selected from the group consisting of (1-B1) a straight-chain alkylene group, (1-B2) a branched alkylene group, (1-B3) an alkylene group having a hydroxyl group, (1-B4) a cycloalkylene group, (1-B5) an aryl group, and (1-B6) an aryl alkylene group is bonded through at least one bond selected from (a) an ether bond and (b) an ester bond.

A second aspect of the present invention is directed to an information storage medium comprising a light transmitting layer made of a cured film of the ultraviolet curable composition, capable of recording and playing back by irradiating with laser light having an emission wavelength of 370 to 430 nm, wherein the ultraviolet curable composition is an ultraviolet curable composition containing a compound having two or more maleimide groups in the molecule.

Also, the ultraviolet curable composition may contain a compound having an acrylate group.

In the information storage medium in the second aspect, the compound having two or more maleimide groups in the molecule may be a compound represented by the general formula (1).

### BEST MODE FOR CARRYING OUT THE INVENTION

As described above, the ultraviolet curable composition for forming a light transmitting layer used in the present invention is a compound having itself a photopolymerization initiating function, and therefore the use of a photopolymerization initiator is not required. Accordingly, an influence of an aromatic ring of most photopolymerization initiators is not exerted, and therefore the cause of reduction in the transmittance at a wavelength λ of approximately 400 nm can be completely excluded and high transmittance can be secured.

The maleimide compound used in present invention can be obtained by synthesizing utilizing the technology disclosed in Japanese Unexamined Patent Application, First Publication No. Hei 11-124403 and other known technologies.

The maleimide compound as an ultraviolet curable composition used to form a light transmitting layer in the present invention preferably has a structure of the general formula (1). With such a structure, a coating composition suited for application and coating can be easily prepared.

Although the maleimide compound may have an aromatic ring in view of the structure, the content is preferably low. To further improve the light transmittance, raw materials are preferably selected in the synthesis of the maleimide compound.

As described previously, similar to the case where absorption of light having a wavelength λ of approximately 400 nm due to the aromatic ring contained therein lowers the light transmittance when using a common photopolymerization initiator, it is assumed that the same adverse influence is exerted when the polymerizable compound itself has the aromatic ring. It is effective to secure high transmittance of the light transmitting layer to obtain an ultraviolet curable composition for light transmitting layer by preparing a maleimide compound having a structure containing the aromatic ring in a low an amount as possible.

The ultraviolet curable composition used in the present invention preferably contains a maleimide compound as a main component and an acrylate compound and other components as a subsidiary component.

It is not indispensable to use the maleimide compound in combination with the acrylate compound and the maleimide compound alone can be used as a composition component.

For the purpose of imparting various characteristics to the cured film and improving the functionality (for example, optimization of the viscosity and improvement in adhesion to the substrate), the use of various acrylate compounds in combination is very effective, thus increasing the degree of freedom of selection and decision of raw materials for satisfying required performances.

Because of the necessity of kinds and properties of the acrylate compounds to be used in combination as well as manufacturing conditions thereof, the acrylate compounds can be used in combination with a photopolymerization initiator as long as they satisfy characteristics of the light transmitting layer.

As the acrylate compound used in combination with the maleimide compound when the ultraviolet curable composition used in the present invention is prepared, conventionally known various acrylate compounds can be used. As described hereinafter, mono- or multifunctional (meth)acrylate compounds in the form of prepolymer, oligomer or monomer may be used alone, or two or more kinds thereof can be used in combination.

The objective information storage medium can be obtained by applying an ultraviolet curable composition containing a maleimide compound prepared from the above compounds on a previously prepared substrate comprising a reflection film and/or an information storage layer, and curing the composition using a conventionally known ultraviolet curing technology to form a light transmitting layer.

This fact means to provide a method of recording or playing back information in an optical disc system using blue-violet laser light having an emission wavelength λ in a range from 370 to 430 nm as irradiation light and to provide an information storage medium which can be used in the system, that is, high storage density optical disc.

The present invention will now be described in detail.

The ultraviolet curable composition used in the present invention contains a compound having two or more maleimide groups in the molecule (hereinafter referred to as a maleimide derivative), and preferably has a structure represented by the following general formula (1): 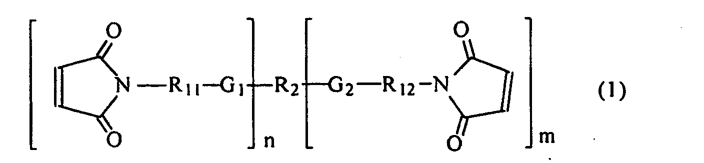 wherein m and n each independently represents an integer of 1 to 5 and m + n represent an integer of 6 or less, R₁₁ and R₁₂ each independently represents a hydrocarbon bond composed of an aliphatic group or an aromatic group, G₁ and G₂ each independently represents any of an ether bond, an ester bond, a urethane bond, and a carbonate bond, and R₂ represents (A) a (poly)ether bonded chain or a (poly)ether residue, (B) a (poly)ester bonded chain or a (poly)ester residue, (C) a (poly)urethane bonded chain or a (poly)urethane residue, or (D) a (poly)carbonate bonded chain or a (poly)carbonate residue, each having an average molecular weight of 40 to 100,000 in which an aliphatic group or an aromatic group is bonded through at least one bond selected from the group consisting of (a) an ether bond, (b) an ester bond, (c) a urethane bond, and (d) a carbonate bond.

In the compound of the general formula (1), more preferably, R₁₁ and R₁₂ each independently represents a hydrocarbon bond selected from the group consisting of (1-A1) an alkylene group, (1-A2) a cycloalkylene group, (1-A3) an aryl alkylene group, and (1-A4) a cycloalkyl alkylene group, G₁ and G₂ each independently represents an ester bond represented by -COO- or -OCO-, and R₂ represents (A) a (poly)ether bonded chain or a (poly)ether residue or (B) a (poly)ester bonded chain or a (poly)ester residue, each having an average molecular weight of 100 to 100,000 in which at least one organic group selected from the group consisting of (1-B1) a straight-chain alkylene group, (1-B2) a branched alkylene group, (1-B3) an alkylene group having a hydroxyl group, (1-B4) a cycloalkylene group, (1-B5) an aryl group, and (1-B6) an aryl alkylene group is bonded through at least one bond selected from (a) an ether bond and (b) an ester bond.

Specific examples of R₁₁ and R₁₂ include, but are not limited to, straight-chain alkylene groups such as methylene groups, ethylene groups, trimethylene groups, tetramethylene groups, pentamethylene groups, hexamethylene groups, heptamethylene groups, octamethylene groups, nonamethylene groups, decamethylene groups, undecamethylene groups, or dodecamethylene groups; alkylene groups having a branched alkyl group, such as 1-methylethylene groups, 1-methyl-trimethylene groups, 2-methyl-trimethylene groups, 1-methyl-tetramethylene groups, 2-methyl-tetramethylene groups, 1-methyl-pentamethylene groups, 2-methyl-pentamethylene groups, 3-methyl-pentamethylene groups, or neopentyl groups; cycloalkylene groups such as cyclopentylene groups or cyclohexylene groups; aryl alkylene groups having an aryl group on the main chain or side chain, such as benzylene groups, 2,2-diphenyl-trimethylene groups, 1-phenyl-ethylene groups, 1-phenyl-tetraethylene groups, or 2-phenyl-tetraethylene groups; and cycloalkyl-alkylene groups having a cycloalkyl group on the main chain or side chain, such as cyclohexylmethylene groups, 1-cyclohexyl-ethylene groups, 1-cyclohexyl-tetraethylene groups, or 2-cyclohexyl-tetraethylene groups.

R₂ may be a bonded chain composed of an oligomer or polymer consisting of plural repeated units of a bonded chain.

Specific examples of the bonded chain or residue as for R₂ include, but are not limited to:
(a) a bonded chain or residue composed of (poly)ether (poly)ol having an average molecular weight of 40 to 100,000 and one or more repeating units in which at least one hydrocarbon group selected from the group consisting of straight-chain alkylene group, branched alkylene group, cycloalkylene group, and aryl group is bonded through an ether bond;
(b) a bonded chain or residue composed of (poly)ester (poly)ol having an average molecular weight of 40 to 100,000 and one or more repeating units in which at least one hydrocarbon group selected from the group consisting of straight-chain alkylene group, branched alkylene group, cycloalkylene group, and aryl group is bonded through an ester bond;
(c) a bonded chain or residue composed of (poly)carboxylic acid {(poly)ether (poly)ol} ester having a polycarboxylic acid residue at the end, which is obtained by esterifying (poly)ether (poly)ol having an average molecular weight of 40 to 100,000 and one or more repeating units in which at least one hydrocarbon group selected from the group consisting of straight-chain alkylene group, branched alkylene group, cycloalkylene group, and aryl group is bonded through an ether bond with di- to hexa-carboxylic acid (hereinafter abbreviated to polycarboxylic acid);
(d) a bonded chain or residue composed of (poly)carboxylic acid {(poly)ester (poly)ol} ester having a polycarboxylic acid residue at the end, which is obtained by esterifying (poly)ester (poly)ol having an average molecular weight of 40 to 100,000 and one or more repeating units in which at least one hydrocarbon group selected from the group consisting of straight-chain alkylene group, branched alkylene group, cycloalkylene group, and aryl group is bonded through an ether bond and an ester bond with polycarboxylic acid;
(e) a bonded chain or residue obtained by ring opening of (poly)epoxide having an average molecular weight of 100 to 40,000 and one or more repeating units in which at least one hydrocarbon group selected from the group consisting of straight-chain alkylene group, branched alkylene group, cycloalkylene group, and aryl group is bonded through an ether bond;
(f) a bonded chain or residue composed of (poly)ether (poly)isocyanate, which is obtained by the reaction, to be a urethane, of (poly)ether (poly)ol having an average molecular weight of 40 to 100,000 and one or more repeating units in which at least one hydrocarbon group selected from the group consisting of straight-chain alkylene group, branched alkylene group, cycloalkylene group, and aryl group is bonded through an ether bond with organic (poly)isocyanate;
(g) a bonded chain or residue composed of (poly)ester (poly)isocyanate, which is obtained by the reaction, to be a urethane, of (poly)ester (poly)ol having an average molecular weight of 40 to 100,000 and one or more repeating units in which at least one hydrocarbon group selected from the group consisting of straight-chain alkylene group, branched alkylene group, cycloalkylene group and aryl group is bonded through an ester bond with organic (poly)isocyanate; and
(h) a bonded chain or residue composed of a carbonate ester of (poly)ether (poly)ol having an average molecular weight of 40 to 100,000 and one or more repeating units in which at least one hydrocarbon group selected from the group consisting of straight-chain alkylene group, branched alkylene group, cycloalkylene group and aryl group is bonded through an ether bond.

Examples of the (poly)ether (poly)ol constituting the bonded chain or residue (a) include polyalkylene glycols such as polyethylene glycol, polypropylene glycol, polybutylene glycol, and polytetramethylene glycol; and ethylene oxide-modified compound, propylene oxide-modified compound, butylene oxide-modified compound and tetrahydrofuran-modified compound of alkylene glycols such as ethylene glycol, propanediol, propylene glycol, tetramethylene glycol, pentamethylene glycol, hexanediol, neopentyl glycol, glycerin, trimethylolpropane, pentaerythritol, diglycerin, ditrimethylolpropane, and dipentaerythritol. Among these, various modified compounds of alkylene glycols are preferred.

Examples of the (poly)ether (poly)ol constituting the bonded chain (a) include, but are not limited to, copolymer of ethylene oxide and propylene oxide, copolymer of propylene glycol and tetrahydrofuran, copolymer of ethylene glycol and tetrahydrofuran, hydrocarbon-type polyols such as polyisoprene glycol, hydrogenated polyisoprene glycol, polybutadiene glycol and hydrogenated polybutadiene glycol, and polyhydric hydroxyl group compound such as polytetramethylene hexaglyceryl ether (tetrahydrofuran-modified compound of hexaglycerin).

Examples of the (poly)ester (poly)ol constituting the bonded chain or residue (b) include, but are not limited to, polyalkylene glycols such as polyethylene glycol, polypropylene glycol, polybutylene glycol and polytetramethylene glycol, or ε-caprolactone-modified compound, γ-butyrolactone-modified compound, δ-valerolactone-modified compound or methylvalerolactone-modified compound of alkylene glycols such as ethylene glycol, propanediol, propylene glycol, tetramethylene glycol, pentamethylene glycol, hexanediol, neopentyl glycol, glycerin, trimethylolpropane, pentaerythritol, diglycerin, ditrimethylolpropane, and dipentaerythritol; aliphatic polyester polyol which is an esterified compound of an aliphatic dicarboxylic acid such as adipic acid or dimer acid, and a polyol such as neopentyl glycol or methylpentanediol; polyester polyol such as aromatic polyester polyol which is an esterified compound of an aromatic dicarboxylic acid such as teraphthalic acid and a polyol such as neopentyl glycol; esterified compound of a polyhydric hydroxyl group compound such as polycarbonate polyol, acrylic polyol or polytetramethylene hexaglyceryl ether (tetrahydrofuran-modified compound of hexaglycerin) and a dicarboxylic acid such as fumaric acid, phthalic acid, isophthalic acid, itaconic acid, adipic acid, sebacic acid or maleic acid; and polyhydric hydroxyl group-containing compound such as monoglyceride, which is obtained by the transesterification reaction of a polyhydric hydroxyl group-containing compound such as glycerin and fatty acid esters of animals and plants.

Examples of the (poly)carboxylic acid {(poly)ether (poly)ol} ester having polycarboxylic acid at the end which constitutes the bonded chain or residue (c) include, but are not limited to, (poly)carboxylic acid {(poly)ether (poly)ol} ester having polycarboxylic acid at the end, which is obtained by esterifying (1) polycarboxylic acid such as succinic acid, adipic acid, phthalic acid, hexahydrophthalic acid, tetrahydrophthalic acid, fumaric acid, isophthalic acid, itaconic acid, adipic acid, sebacic acid, maleic acid, trimellitic acid, pyromellitic acid, benzenepentacarboxylic acid, benzenehexacarboxylic acid, citric acid, tetrahydrofurantetracarboxylic acid, or cyclohexanetricarboxylic acid with (2) (poly)ether (poly)ol described in (a).

Examples of the (poly)carboxylic acid {(poly)ester (poly)ol} ester having polycarboxylic acid at the end which constitutes the bonded chain or residue (d) include, but are not limited to, (poly)carboxylic acid {(poly)ester (poly)ol} ester having polycarboxylic acid at the end, which is obtained by esterifying (1) di- to hexa-carboxylic acid such as succinic acid, adipic acid, phthalic acid, hexahydrophthalic acid, tetrahydrophthalic acid, fumaric acid, isophthalic acid, itaconic acid, adipic acid, sebacic acid, maleic acid, trimellitic acid, pyromellitic acid, benzenepentacarboxylic acid, benzenehexacarboxylic acid, citric acid, tetrahydrofurantetracarboxylic acid, or cyclohexanecarboxylic acid with (2) (poly)ester (poly)ol described in (b).

Examples of the (poly)epoxide constituting the bonded chain or residue (e) include, but are not limited to, epichlorohydrin-modified bisphenol type epoxy resin synethesized from (methyl)epichlorohydrin, bisphenol A or bisphenol F and ethylene oxide or propylene oxide-modified compound thereof; epichlorohydrin-modified hydrogenated bisphenol type epoxy resin and epoxy novolak resin synthesized from (methyl)epichlorohydrin, hydrogenated bisphenol A, hydrogenated bisphenol F and ethylene oxide-modified epichlorohydrin or propylene oxide-modified compound; reaction product of phenol or biphenol, and (methyl)epichlorohydrin; aromatic epoxy resin such as glycidyl ester of terephthalic acid, isophthalic acid, or pyromellitic acid; polyglycidyl ether of glycols such as (poly)ethylene glycol, (poly)propylene glycol, (poly)butylene glycol, (poly)tetramethylene glycol or neopentyl glycol, or alkylene oxide-modified compound thereof; glycidyl ether of aliphatic polyhydric alcohol such as trimethylolpropane, trimethylolethane, glycerin, diglycerin, erythritol, pentaerythritol, sorbitol, 1,4-butanediol or 1,6-hexanediol, or alkylene oxide-modified compound thereof; glycidyl ester of carboxylic acid such as adipic acid, sebacic acid, maleic acid or itaconic acid; glycidyl ether of polyester polyol of polyhydric alcohol and polyhydric carboxylic acid; copolymer of glycidyl (meth)acrylate or methylglycidyl (meth)acrylate; and glycidyl ester of higher fatty acid, epoxidated linseed oil, epoxidated soybean oil, epoxidated castor oil, and aliphatic epoxy resin such as epoxidated polybutadiene.

Examples of the (poly)ether (poly)isocyanate constituting the bonded chain or residue (f) include, but are not limited to, (poly)ether (poly)isocyanate obtained by the reaction, to be a urethane, of polyisocyanate and (poly)ether (poly)ol, for example, aliphatic diisocyanate compound such as methylene diisocyanate, hexamethylene diisocyanate, trimethylhexamethylene diisocyanate, tetramethylene diisocyanate, lysine diisocyanate, or dimer acid diisocyanate; aromatic diisocyanate compound such as 2,4-tolylene diisocyanate, dimer of 2,4-tolylene diisocyanate, 2,6-tolylene diisocyanate, p-xylene diisocyanate, m-xylene diisocyanate, 4,4'-diphenylmethane diisocyanate, 1,5-naphthylene diisocyanate, or 3,3'-dimethylbiphenyl-4,4'-diisocyanate; and alicyclic diisocyanate such as isophorone diisocyanate, 4,4'-methylenebis(cyclohexyl isocyanate), methylcyclohexane-2,4 (or 2,6) diisocyanate, or 1,3-(isocyanatemethylene)cyclohexane.

Examples of the (poly)ether (poly)ol used in the reaction with the polyisocyanate include polyalkylene glycols such as polyethylene glycol, polypropylene glycol, polybutylene glycol, and polytetramethylene glycol; and ethylene oxide-modified compound, propylene oxide-modified compound, butylene oxide-modified compound or tetrahydrofuran-modified compound of alkylene glycols such as ethylene glycol, propanediol, propylene glycol, tetramethylene glycol, pentamethylene glycol, hexanediol, neopentyl glycol, glycerin, trimethylolpropane, pentaerythritol, diglycerin, ditrimethylolpropane, and dipentaerythritol. Among these, various modified compounds of alkylene glycols are preferred.

Examples of the (poly)ether (poly)ol used in the reaction with the polyisocyanate include, but are not limited to, copolymer of ethylene oxide and propylene oxide, copolymer of propylene glycol and tetrahydrofuran, copolymer of ethylene glycol and tetrahydrofuran, and hydrocarbon-type polyols such as polyisoprene glycol, hydrogenated polyisoprene glycol, polybutadiene glycol, and hydrogenated polybutadiene glycol; and polyhydric hydroxyl group compound such as polytetramethylenehexaglyceryl ether (tetrahydrofuran-modified compound of hexaglycerin).

Examples of the (poly)ester (poly)isocyanate constituting the bonded chain or residue (g) include, but are not limited to, (poly)ester (poly)isocyanate obtained by the reaction, to be a urethane, the polyisocyanate described in the bonded chain (a) with the (poly)ester (poly)ol.

Examples of the (poly)ester (poly)ol used in the reaction with the polyisocyanate include, but are not limited to, ε-caprolactone-modified compound, γ-butyrolactone-modified compound, δ-valerolactone-modified compound and methylvalerolactone-modified compound of alkylene glycols such as ethylene glycol, propanediol, propylene glycol, tetramethylene glycol, pentamethylene glycol, hexanediol, neopentyl glycol, glycerin, trimethylolpropane, pentaerythritol, diglycerin, ditrimethylolpropane, and dipentaerythritol; aliphatic polyester polyol which is an esterified compound of an aliphatic dicarboxylic acid such as adipic acid or dimer acid and a polyol such as neopentyl glycol or methylpentanediol; polyester polyol such as aromatic polyester polyol, which is an esterified compound of an aromatic dicarboxylic acid such as terephthalic acid and a polyol such as neopentyl glycol; esterified compound of a polyhydric hydroxyl group compound such as polycarbonate polyol, acrylic polyol, or polytetramethylene hexaglyceryl ether (tetrahydrofuran-modified compound of hexaglycerin) and a dicarboxylic acid such as fumaric acid, phthalic acid, isophthalic acid, itaconic acid, adipic acid, sebacic acid, or maleic acid; and polyhydric hydroxyl group-containing compound such as monoglyceride, which is obtained by the transesterification reaction of a polyhydric hydroxyl group-containing compound such as glycerin and fatty acid ester of animals and plants.

Examples of the (poly)ether (poly)ol constituting the bonded chain or residue (h) include, but are not limited to, (poly)ether (poly)ol described in (a).

Examples of the compound used in the carbonate esterification with the (poly)ether (poly)ol include diethyl carbonate, dipropyl carbonate or phosgen. Polycarbonation can be conducted by the alternating polymerization of an epoxide and carbon dioxide but is not limited thereto.

Among these, R₂ is preferably (1) (A) a (poly)ether bonded chain or a (poly)ether residue or (B) a (poly)ester bonded chain or a (poly)ester residue, each having an average molecular weight of 100 to 100,000 in which at least one organic group selected from the group consisting of (1-B1-1) a C₂₋₂₄ straight-chain alkylene group, (1-B2-1) a C₂₋₂₄ branched alkylene group, (1-B3-1) a C₂₋₂₄ alkylene group having a hydroxyl group, (1-B4-1) a cycloalkylene group, (1-B5-1) an aryl group, and (1-B6-1) an aryl alkylene group is bonded through at least one bond selected from the group consisting of (a) an ether bond and (b)an ester bond, and particularly preferably (2) a (poly)ether bonded chain or a (poly)ether residue, each having an average molecular weight of 100 to 100,000 composed of a repeating unit having (1-B1-2) a C₂₋₂₄ straight-chain alkylene group, (1-B2-2) a C₂₋₂₄ branched alkylene group, (1-B3-2) a C₂₋₂₄ alkylene group having a hydroxyl group, and/or (1-B5-2) an aryl group, or (3) a (poly)ester bonded chain or a (poly)ester residue, each having an average molecular weight of 100 to 100,000 composed of a repeating unit having (1-B1-3) a C₂₋₂₄ straight-chain alkylene group, (1-B2-3) a C₂₋₂₄ branched alkylene group, (1-B3-3) a C₂₋₂₄ alkylene group having a hydroxyl group, and/or (1-B5-3) an aryl group.

The maleimide compound-containing ultraviolet curable composition used in the present invention must have proper ultraviolet curability. Therefore, a particularly preferred one is a maleimide derivative in which R₁₁ and R₁₂ represent a C₁₋₅ alkylene group, G₁ and G₂ represent an ester bond represented by -COO- or -OCO-, and R₂ represents a (poly)ether bonded chain or a (poly)ether residue, each having an average molecular weight of 100 to 1000 composed of a repeating unit having (1-B1-4) a C₂₋₆ straight-chain alkylene group, (1-B2-4) a C₂₋₆ branched alkylene group, and/or (1-B3-4) a C₂₋₆ alkylene group having a hydroxyl group.

In the preparation of the ultraviolet curable composition used in the present invention, a monofunctional (meth)acrylate or a multifunctional (meth)acrylate can be used as a polymerizable monomer component. These compounds can be used alone, or two or more kinds thereof can be used in combination.

Examples of usable polymerizable monomers include the following. Examples of the monofunctional (meth)acrylate include, but are not limited to, (meth)acrylates having, as a substituent, groups such as methyl, ethyl, propyl, butyl, amyl, 2-ethylhexyl, octyl, nonyl, dodecyl, hexadecyl, octadecyl, cyclohexyl, benzyl, methoxyethyl, butoxyethyl, phenoxyethyl, nonylphenoxyethyl, tetrahydrofurfuryl, glycidyl, 2-hydroxyethyl, 2-hydroxypropyl, 3-chloro-2-hydroxypropyl, dimethylaminoethyl, diethylaminoethyl, nonylphenoxyethyltetrahydrofurfuryl, caprolactone-modified tetrahydrofurfuryl, isobornyl, dicyclopentanyl, dicyclopentenyl, and dicyclopentenyloxyethyl.

Examples of the multifunctional (meth)acrylate include, but are not limited to, diacrylate such as 1,3-butylene glycol, 1,4-butanediol, 1,5-pentanediol, 3-methyl-1,5-pentanediol, 1,6-hexanediol, neopentyl glycol, 1,8-octanediol, 1,9-nonanediol, tricyclodecanedimethanol, ethylene glycol, polyethylene glycol, propylene glycol, tripropylene glycol, or polypropylene glycol, di(meth)acrylate of tris(2-hydroxyethyl) isocyanurate, di(meth)acrylate of diol, which is obtained by adding 4 or more mol of ethylene oxide or propylene oxide to 1 mol of neopentyl glycol, di(meth)acrylate of diol, which is obtained by adding 2 mol of ethylene oxide or propylene oxide to 1 mol of bisphenol A, di- or tri(meth)acrylate of triol, which is obtained by adding 3 or more mol of ethylene oxide or propylene oxide to 1 mol of trimethylolpropane, di(meth)acrylate of diol, which is obtained by adding 4 or more mol of ethylene oxide or propylene oxide to 1 mol of bisphenol A, tris(2-hydroxyethyl) isocyanurate tri(meth)acrylate, trimethylolpropane tri(meth)acrylate, pentaerythritol tri(meth)acrylate, poly(meth)acrylate of dipentaerythritol, caprolactone-modified tris[(meth)acryloxyethyl] isocyanurate, poly(meth)acrylate of alkyl-modified dipentaerythritol, poly(meth)acrylate of caprolactone-modified dipentaerythritol, hydroxypivalic acid neopentyl glycol diacrylate, caprolactone-modified hydroxypivalic acid neopentyl glycol diacrylate, ethylene oxide-modified phosphoric acid (meth)acrylate, and ethylene oxide-modified alkylated phosphoric acid (meth)acrylate.

Also there can be used N-vinyl-2-pyrrolidone, acryloylmorpholine, vinylimidazole, N-vinyl caprolactam, vinyl acetate, (meth)acrylic acid, (meth)acrylamide, N-hydroxymethylacrylamide, or N-hydroxyethylacrylamide, and alkyl ether compounds thereof.

Examples of the polymerizable oligomer which can be used in combination like the polymerizable monomer include, but are not limited to, polyester acrylates, polyether acrylates, epoxy acrylates, and urethane acrylates.

To obtain higher adhesion to the information storage layer made mainly of a metal thin film, a (meth)acrylate compound having a skeleton made of phosphoric acid or a derivative thereof is incorporated into the composition. To further enhance the hardness, a (meth)acrylate compound having a larger number of (meth)acryloyl groups in a molecule is incorporated. To control the elasticity modulus, a comparatively polymeric polymerization component such as polymerizable oligomer can be incorporated.

Since the maleimide derivative used in the present invention has a photopolymerization initiating function, a photoinitiator is not used, basically. As long as the effects of the present invention are not impaired, commonly used photoinitiators may be used, taking into account curability; however, the amount is 5 parts by weight, and preferably 2 parts by weight. Examples of the photoinitiator include benzoisoisobutyl ether, 2,4-diethylthioxanthone, 2-isopropylthioxanthone, 2-chlorothioxanthone, benzyl, 2,4,6-trimethylbenzoyldiphenylphosphine oxide, 2-benzyl-2-dimethylamino-1-(4-morpholinophenyl)-butanone-1, and bis(2,6-dimethoxybenzoyl)-2,4,4-trimethylpentylphosphine oxide. There can be used an intramolecular cleavage type photopolymerization initiator such as benzoylethyl ether, benzyl dimethyl ketal, 2-hydroxy-2-methyl-1-phenyl-propan-1-one, 1-(4-isopropylphenyl)-2-hydroxy-2-methylpropan-1-one, or 2-methyl-1-(4-methylthiophenyl)-2-morpholino-propanon-1-one and also there can be used a hydrogen abstraction type photopolymerization initiator such as benzophenone, 4-phenylbenzophenone, isophthalophenone, or 4-benzoyl-4'-methyl-diphenyl sulfide.

It is also possible to use the photopolymerization initiator in combination with sensitizers, for example, amines which do not cause the addition polymerization reaction with the polymerizable component, such as triethylamine, methyldiethanolamine, triethanolamine, p-diethylaminoacetophenone, p-dimethylaminoacetophenone, ethyl p-dimethylaminobenzoate, isoamyl p-dimethylaminobenzoate, N,N-dimethylbenzylamine, and 4,4'-bis(diethylamino)benzophenone. As a matter of course, the photopolymerization initiator and the sensitizer are preferably selected from those which are superior in solubility in a curable component and do not impair ultraviolet permeability.

In the composition used in the present invention, surfactants can be used for the purpose of increasing affinity with the substrate to be coated and smoothening the cured film as a result of control of surface tension. Examples of usable surfactant include, but are not limited to, surfactants used as leveling agents, modified silicones, acrylic copolymers, and fluorine surfactants.

Conventionally known defoamers, plasticizers, antioxidants, thermopolymerization inhibitors, ultraviolet absorbers, flame retardants and coupling agents, which can be used in combination with the composition used in the present invention, can be used without any limitation as long as the curability and characteristics of the cured film are not impaired.

The ultraviolet curable composition used in the present invention is preferably liquid at normal temperature to 40°C. It is preferred to use no solvent and, if used, the amount of solvent is preferably as low as possible. When using the composition in the form of a thick film, the viscosity is preferably controlled in a range from 100 to 2500 mPa·s. In the preparation of the composition, the chemical composition is appropriately selected so that physical properties of the composition itself and physical properties of the cured film are suited for the information storage medium.

Examples of standards for the preparation and selection include the following on the major premise that information recorded on the information storage layer is not changed, i.e., abnormality of pits of information recorded on the information storage layer does not arise: components in the composition, which cause neither crystallization nor phase separation under the conditions of a coating temperature; leveling properties capable of providing smooth and uniform wet surface in a short time; less causative agent or ions which corrode or deteriorate the coated surface; minimum solubility of a gas which can suppress curing; transparency which enables the composition to be highly transmissive to ultraviolet light before and after curing; elasticity modulus of the cured film in a specific range; minimum water-vapor permeability of the cured film; minimum shrinkage ratio of the composition after curing; and excellent absolute measured values with respect to the respective evaluation items and minimum change in absolute value between the ordinary state and the exposure to high temperature and high humidity for a long time. The ultraviolet curable composition is prepared so as to meet all standards or approach these standards as closely as possible.

The embodiments of the information storage medium of the present invention will now be described by way of preferred aspects.

A disc-shaped plastic substrate comprising an information storage layer and a reflection film formed on a substrate, in this order, or a disc-shaped plastic substrate comprising a reflection film laminated on the unevenness corresponding to recorded information, is prepared.

Then, a composition is prepared by using a compound represented by the general formula (1) as an essential component and a main component and a multifunctional (meth)acrylate having two or more (meth)acryloyl groups or a multifunctional (meth)acrylate having a (meth)acryloyl group as a subsidiary component and optionally using a small amount of a photopolymerization initiator.

The composition is applied on the disc-shaped plastic substrate so as to coat the information storage layer or the metal film, and then the composition is cured by irradiating with ultraviolet light to form a light transmitting layer, thus obtaining an optical disc-shaped information storage medium.

As the system of irradiation with ultraviolet light, a flash irradiation system may be used, in addition to a general continuous light irradiation. As a lamp, for example, a metal halide lamp, medium pressure mercury lamp, high pressure mercury lamp, and xenon lamp can be used. The dose of ultraviolet light is preferably in a range from 500 to 20000 J/m².

Although the thickness of the light transmitting layer in the information storage medium is commonly set in a range from about 3 to 200 µm, the thickness of the cured film must be sufficiently controlled because it directly exerts an influence on the light transmittance.

The light transmitting layer in the information storage medium is preferably transmissive to laser light used in a light transmittance of 85% or more. When the light transmittance is less than 85%, reflected light intensity of laser light is decreased, and thus the resulting optical disc has poor reliability.

The methods of recording on or playing back from the information storage medium will now be described.

Recording on or playback from the information storage medium is conducted by irradiating with blue-violet laser light having an emission wavelength of 370 to 430 nm.

### EXAMPLES

The present invention will be described in detail by way of Examples (Test Examples), but is not limited to these Test Examples. In the following Examples, parts are by weight unless otherwise specified.

### Test Example 1

In the method described in Japanese Unexamined Patent Application, First Publication No. 11-124403, polypropylene glycol-di-2 maleimide acetate synthesized from maleimideacetic acid and polypropylene glycol (molecular weight: 1000) was used as an ultraviolet curable material.

### Test Example 2

In Test Example 1, polytetramethylene ether glycol-di-2 maleimide acetate synthesized from maleimideacetic acid and polytetramethylene glycol (molecular weight: 650) using the method described in Japanese Unexamined Patent Application, First Publication No. 11-124403 was used as an ultraviolet curable material in place of polypropylene glycol-di-2 maleimide acetate.

### Test Example 3 (using no photopolymerization initiator)

80 Parts of polypropylene glycol-di-2 maleimide acetate synthesized from maleimideacetic acid and polypropylene glycol (molecular weight: 1000) using the method described in Japanese Unexamined Patent Application, First Publication No. Hei 11-124403 and 20 parts of ethylene oxide-modified trimethylolpropane triacrylate were mixed and dissolved at 60°C for one hour to obtain a pale yellow transparent ultraviolet curable composition.

### Test Example 4 (using no photopolymerization initiator)

In Test Example 3, 80 parts of polytetramethylene ether glycol-di-2 maleimide acetate synthesized from maleimideacetic acid and polytetramethylene glycol (molecular weight: 650) using the method described in Japanese Unexamined Patent Application, First Publication No. Hei 11-124403 in place of polypropylene glycol-di-2 maleimide acetate and 20 parts of ethylene oxide-modified trimethylolpropane triacrylate were mixed and dissolved at 60°C for one hour to obtain a pale yellow transparent ultraviolet curable composition.

### Test Example 5 (using 1 part of photopolymerization initiator)

In the same manner as in Test Example 3, except that 19 parts of ethylene oxide-modified trimethylolpropane triacrylate and 1 part of benzyl dimethyl ketal were used in Test Example 4, an ultraviolet curable composition was prepared.

### Test Example 6 (using 5 parts of photopolymerization initiator)

In the same manner as in Test Example 3, except that 75 parts of polypropylene glycol-di-2 maleimide acetate, 20 parts of ethylene oxide-modified trimethylolpropane triacrylate and 5 parts of benzyl dimethyl ketal were used in Test Example 3, an ultraviolet curable composition was prepared.

### Comparative Test Example 1 (conventional acrylate-type ultraviolet curable composition, using 5 parts of photopolymerization initiator)

40 Parts of a bisphenol A epoxy acrylate (Unidic V-5500, manufactured by DAINIPPON INK & CHEMICALS INCORPORATED), 55 parts of ethylene oxide-modified trimethylolpropane triacrylate and 5 parts of benzyl dimethyl ketal were mixed and dissolved at 60°C for one hour to obtain a pale yellow transparent ultraviolet curable composition.

Using the respective materials and compositions prepared in Test Example 1 to Test Example 6 and Comparative Test Example 1, the curability of the compositions by irradiation with ultraviolet light and the light transmittance of the cured films were evaluated by the following test methods 1 and 2. The results are summarized in Table 1.

### Test method 1: Curability

As a typical item which does not lower the productivity in the manufacture of the information storage medium, the curability (ultraviolet light dose for curing) in the process of curing the composition was evaluated.

On a 100 nm thick aluminum disc-shaped polycarbonate substrate having a diameter of 12 cm as a metal thin film of a composition, about 2 g of the composition was dropped in a generally circular shape using a dispenser and was then applied while rotating at 1000 times·min⁻¹ for several seconds using a spin coater in a thickness of about 100 µm. Using a UV meter UVPF-36 manufactured by EYE GRAPHICS CO., LTD. and a belt conveyor type ultraviolet light irradiation apparatus equipped with a concentrating medium pressure mercury lamp (with cold mirror, lamp: 120 W/cm) controlled at an ultraviolet light intensity of 5000 W/m², a minimum ultraviolet light dose (J/m²) required to complete curing was measured. The completion of curing was confirmed by the surface curability in a methanol wipe test of rubbing the film surface using a wiper impregnated with methanol, and inner curability in a scratch test using a pencil. In the methanol wipe test, the time of the point where rubbed marks did not remain on the film surface was regarded as the completion of curing, while the time of the point where no scratch arises on the film is regarded as the completion of curing in the pencil scratch test (using a pencil having hardness of 2B). The resulting minimum ultraviolet light dose was taken as the index of the surface curability and thick film curability.

### Test method 2: Measurement of transmittance of cured film

On a glass substrate, about 2 g of the composition was dropped in a generally circular shape using a dispenser and then applied while rotating at 1000 times·min⁻¹ for several seconds using a spin coater in a thickness of about 100 µm. Using a UV meter UVPF-36 manufactured by EYE GRAPHICS CO., LTD. and a belt conveyor type ultraviolet light irradiation apparatus equipped with a concentrating medium pressure mercury lamp (with cold mirror, lamp: 120 W/cm) controlled at an ultraviolet light intensity of 5000 W/m², the coated glass plate was irradiated at an ultraviolet light dose of 5000 J/m². After curing, the cured film was peeled off from the glass substrate and the transmittance of the cured film as a sample was measured at a wavelength λ of 400 nm using an ultraviolet recording spectrophotometer UV-3100 manufactured by Shimadzu Corporation.

When the light transmittance was measured, the value from a spectrophotometer can be approximated to the value of laser light.

**Table 1**

| Item (unit) | Viscosity (mPa·s) | Surface curability (J/m²) | Thick film curability (J/m²) | Cured film light transmittance (%) |
|---|---|---|---|---|
| Test Example 1 | 2000 | 250 | 750 | 90 |
| Test Example 2 | 1800 | 250 | 750 | 90 |
| Test Example 3 | 900 | 300 | 800 | 88 |
| Test Example 4 | 900 | 300 | 800 | 88 |
| Test Example 5 | 900 | 200 | 600 | 85 |
| Test Example 6 | 900 | 150 | 400 | 70 |
| Comparative Test Example 1 | 1100 | 800 | 800 | 48 |

As is apparent from Table 1, the respective materials and compositions of Test Example 1 to Test Example 6 exhibited the same or higher curability as compared with the composition containing only an acrylate-type compound as a conventional polymerizable compound of Comparative Test Example 1. Thus, it was judged that the productivity was not lowered by the curability in the manufacture.

The light transmittance at a wavelength λ of 400 nm of the cured film is 90% in Test Example 1 and Test Example 2, 88% in Test Example 3 and Test Example 4, or 85% in Test Example 5 wherein 1 part of a conventional photopolymerization initiator was added and, as is apparent from these results, all samples have excellent characteristics.

In contrast, the light transmittance of Test Example 6 wherein 5 parts of a conventional photopolymerization initiator was added was reduced to 70%, while the light transmittance of Comparative Test Example 1 wherein the composition containing only a conventional acrylate-type compound was very low such as 48%. As is apparent from these results, the photopolymerization initiator can be used in small amounts, but is not suited for use in an amount of 5 parts or more because the light transmittance is expected to be reduced to 70% or less.

As is apparent from a comparison between Test Example 6 and Comparative Test Example 1, i.e. comparison between the maleimide derivative-containing composition and the composition containing only a conventional acrylate-type compound, each containing the same kind and amount of the photopolymerization initiator, the light transmittance noticeably increases from 48% to 70% by using the maleimide derivative in place of the acrylate-type compound.

As is apparent from the above results, when light transmitting layers are formed by using the respective materials or compositions of Test Example 1 to Test Example 5 and information storage media comprising the light transmitting layer are provided, it is made possible to provide a method of recording or playing back information in an optical disc system using blue-violet laser light having an emission wavelength λ in a range from 370 to 430 nm as irradiation light.

One example of the manufacture of the information storage medium will now be described.

A disc-shaped plastic substrate comprising an information storage layer and reflection film formed on a substrate in this order, or a disc-shaped plastic substrate comprising a reflection film laminated on the unevenness corresponding to recorded information is prepared.

Then, a composition is prepared by using a compound represented by the general formula (1) as an essential component and a main component and a multifunctional (meth)acrylate having two or more (meth)acryloyl groups or a multifunctional (meth)acrylate having a (meth)acryloyl group as a subsidiary component and optionally using a small amount of a photopolymerization initiator.

The composition is applied on the disc-shaped plastic substrate so as to coat the information storage layer or the metal film, and then the composition is cured by irradiating with ultraviolet light to form a light transmitting layer, thus obtaining an optical disc-shaped information storage medium.

As the system of irradiation with ultraviolet light, a flash irradiation system may be used, in addition to a general continuous light irradiation. As a lamp, for example, a metal halide lamp, medium pressure mercury lamp, high pressure mercury lamp and xenon lamp can be used. The dose of ultraviolet light is preferably in a range from 500 to 20000 J/m².

Although the thickness of the light transmitting layer in the information storage medium is commonly set in a range from about 3 to 200 µm, the thickness of the cured film must be sufficiently controlled because it directly exerts an influence on the light transmittance.

The light transmitting layer in the information storage medium is preferably transmissive to laser light used in a light transmittance of 85% or more. When the light transmittance is less than 85%, reflected light intensity of laser light is reduced and thus the resulting optical disc has poor reliability.

When using the ultraviolet curable composition used in the present invention, an excellent information storage medium can be obtained because of high light transmittance.

The methods of recording on or playing back from the information storage medium will now be described.

Recording on or playback from the information storage medium is conducted by irradiating with blue-violet laser light having emission wavelength of 370 to 430 nm on the light transmitting layer side.

An information storage medium obtained by previously forming unevenness corresponding to information on a disc substrate, forming a reflection film thereon, and forming a light transmitting layer on the reflection film is exclusively used for playback after irradiating with blue-violet laser light having an emission wavelength of 370 to 430 nm. While an information storage medium obtained by providing an information storage layer on a reflection filml formed on a disc substrate and forming a light transmitting layer on the storage layer is used for recording and playback after irradiating with blue-violet laser light.

As the information storage layer, for example, known information storage layers for recording and playback, such as phase transfer type storage layer, magnetooptical storage layer and organic pigment type storage layer can be used.

When using the ultraviolet curable composition used in the present invention, recording and playback on the information storage medium can be conducted with high efficiency even when using the above blue-violet laser light because of very high light transmittance.

### INDUSTRIAL APPLICABILITY

By forming a light transmitting layer made of an ultraviolet curable composition containing the maleimide compound disclosed in the present invention and an information storage medium comprising the same, it is made possible to improve the film curability in view of manufacturing technology as compared with a conventional ultraviolet curable composition whose polymerizable compound is only composed of an acrylate-type compound and to provide an information storage medium having high light transmittance at a wavelength λ of approximately 400 nm.

Consequently, a method of recording or playing back information in an optical disc system using blue-violet laser light as an irradiation light source can be provided and also an information storage medium with high storage density can be realized.

## Claims

1. A method of recording or playing back information on an information storage medium, which comprises irradiating an information storage medium comprising at least a reflection film, an information storage layer, and a light transmitting layer made of a cured film of an ultraviolet curable composition formed on a substrate with laser light having an emission wavelength of 370 to 430 nm, wherein the ultraviolet curable composition is an ultraviolet curable composition containing a compound having two or more maleimide groups in the molecule.

2. The method of recording or playing back information on an information storage medium according to claim 1, wherein the ultraviolet curable composition contains a compound having an acrylate group.

3. The method of recording or playing back information on an information storage medium according to claim 1 or 2, wherein the compound having two or more maleimide groups in the molecule is a compound represented by the following general formula (1): 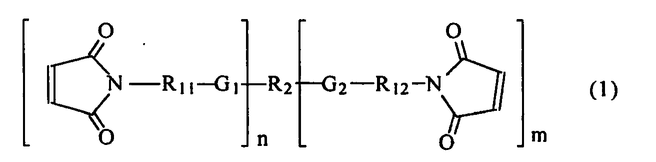 wherein m and n each independently represents an integer of 1 to 5 and m + n represent an integer of 6 or less, R₁₁ and R₁₂ each independently represents a hydrocarbon bond composed of an aliphatic group or an aromatic group, G₁ and G₂ each independently represents any of an ether bond, an ester bond, a urethane bond, and a carbonate bond, and R₂ represents (A) a (poly)ether bonded chain or a (poly)ether residue, (B) a (poly)ester bonded chain or a (poly)ester residue, (C) a (poly)urethane bonded chain or a (poly)urethane residue, or (D) a (poly)carbonate bonded chain or a (poly)carbonate residue, each having an average molecular weight of 40 to 100,000 in which an aliphatic group or an aromatic group is bonded through at least one bond selected from the group consisting of (a) an ether bond, (b) an ester bond, (c) a urethane bond, and (d) a carbonate bond.

4. The method of recording or playing back information on an information storage medium acording to claim I or 2, wherein the compound having two or more maleimide groups in the molecule is a compound of the general formula (1) in which R₁₁ and R₁₂ each independently represents a hydrocarbon bond selected from the group consisting of (1-A1) an alkylene group, (1-A2) a cycloalkylene group, (1-A3) an aryl alkylene group, and (1-A4) a cycloalkyl alkylene group, G₁ and G₂ each independently represents an ester bond represented by-COO- or -OCO-, and R₂ represents (A) a (poly)ether bonded chain or a (poly)ether residue or (B) a (poly)ester bonded chain or a (poly)ester residue, each having an average molecular weight of 100 to 100,000 in which at least one organic group selected from the group consisting of (1-B1) a straight-chain alkylene group, (1-B2) a branched alkylene group, (1-B3) an alkylene group having a hydroxyl group, (1-B4) a cycloalkylene group, (1-B5) an aryl group, and (1-B6) an aryl alkylene group is bonded through at least one bond selected from (a) an ether bond and (b) an ester bond.

5. An information storage medium comprising a light transmitting layer made of a cured film of the ultraviolet curable composition, capable of recording and playing back by irradiating with laser light having an emission wavelength of 370 to 430 nm, wherein the ultraviolet curable composition is an ultraviolet curable composition containing a compound having two or more maleimide groups in the molecule.

6. The information storage medium according to claim 5, wherein the ultraviolet curable composition contains a compound having an acrylate group.

7. The information storage medium according to claim 5, wherein the compound having two or more maleimide groups in the molecule is a compound represented by the general formula (1) of claim 3.
